Europäisches Patentamt

(19) European Patent Office

Office européen des brevets

(11) Publication number: 0 112 080
A1

(12) **EUROPEAN PATENT APPLICATION**

(21) Application number: 83307200.2

(22) Date of filing: 25.11.83

(51) Int. Cl.³: **A 23 K 3/00**
**A 23 K 1/16**

(30) Priority: 11.12.82 GB 8235394

(43) Date of publication of application:
27.06.84 Bulletin 84/26

(84) Designated Contracting States:
AT BE CH DE FR GB IT LI NL SE

(71) Applicant: BP Chemicals Limited
Belgrave House 76 Buckingham Palace Road
London, SW1W 0SU(GB)

(72) Inventor: Black, Brian David
BP Chemical Limited Saltend
Hedon Hull HU12 8DS(GB)

(74) Representative: Krishnan, Suryanarayana
Kalyana et al,
c/o The British Petroleum Company plc Patents Division
Chertsey Road
Sunbury-on-Thames Middlesex TW16 7LN(GB)

(54) Compound animal feedstuffs.

(57) The present invention relates to compound animal feedstuffs containing solid potassium dipropionate as a preservative. The feedstuff contains cereals and cereal by-products as major components, and vegetable and animal proteins as minor components. Solid potassium dipropionate has been found to be the most effective solid preservative when compared with calcium propionate or propionic acid adsorbed on a carrier.

EP 0 112 080 A1

Croydon Printing Company Ltd.

1

# COMPOUND ANIMAL FEEDSTUFFS

The present invention relates to compound animal feedstuffs which contain preservative compositions for stabilising the feedstuffs against deterioration and in particular for preserving the feedstuffs against microbial attack.

Ther term compound animal feedstuffs is used in its broadest sense throughout this specification to include cereals and cereal by-products as major components (eg up to 70% w/w), a sizeable amount of vegetable and animal proteins (eg up to 35% w/w), and minor amounts of miscellaneous components and vegetable products. In addition to the above such compound feedstuffs may contain small amounts of additives which include substances added to the feedstuff in the course of manufacture for some specific purpose other than as a direct source of nutrient.

Virtually all compound feeds are susceptible to spoilage by moulds. Certain moulds have the capacity to produce chemical substances known as mycotoxins which are poisonous and have deleterious effects on animal performance, animal health and ultimately constitute a hazard to humans.

Propionic acid and its neutral salts have been recognised for some time as anti-mould chemicals. Propionic acid, although highly effective, is a corrosive liquid and is not ideally suited for use in compound feed mills where solid materials are preferred. The neutral salts (calcium and sodium propionate) are non-corrosive solids but their anti-mould activity is much reduced compared with propionic acid. It is possible to absorb propionic acid onto a solid carrier

1

material (cf US 4,199,606) but even in this form the product is unpleasant to handle, possesses a pungent smell and is susceptible to evaporative loss of the acid.

It is an object of the present invention to provide a compound animal feedstuff which contains a solid preservative composition distributed therein.

Accordingly, the present invention is a compound animal feedstuff having substantially uniformly distributed therein a solid preservative composition comprising potassium dipropionate.

According to a further embodiment, the present invention is a compound animal feedstuff comprising by weight 50-85% of cereals and cereal by-products, 0-25% of vegetable proteins, 0-10% of animal proteins and minor amounts of miscellaneous products and additives characterised in that said composition has substantially uniformly distributed therein a solid preservative composition comprising potassium dipropionate.

According to yet another embodiment, the present invention is a compound animal feedstuff comprising by weight 50-85% of cereals and cereal by-products, 5-25% of vegetable proteins, 0-10% of animal proteins and minor amounts of miscellaneous products and additives characterised in that said composition has substantially uniformly distributed therein a solid preservative composition comprising potassium dipropionate.

Specific examples of cereals which are used in the compound animal feedstuffs include barley, wheat, oats, rye, maize, rice and mixtures thereof.

The cereal by-products referred to herein include malting by-products. Examples of such by-products which may be used in the compound feedstuffs include the unwanted products from the milling of the cereals referred to above to produce flour and from the germination and extraction of the cereals, especially grain, to produce malt for the brewing and the distillery industries. Examples of milling byproducts include wheat feed, oat hulls, wheat and rice, bran, maize gluten, malt culms, nutritionally improved straw etc. Products from the brewing and distillery industries include brewers grains, barley screenings and spent barley grains (draff).

The vegetable proteins referred to herein include those derived from soya beans, rape seed, sunflower seed, peas, beans etc. This class of materials includes soya bean oil meal and cake, and oil products resulting from linseed oil extraction.

Examples of the animal proteins in the compound animal feedstuff include dairy products, fish meal and fish protein concentrate, meat meal and bone meal.

The miscellaneous products referred to herein include one or more of beet pulp, molasses, fats, waste fruit and vegetable products, waste yeast and other microbial proteins eg single cell protein (SCP), manioc, cassava and tapioca.

The other additives referred to herein which are used in small quantities include vitamins, anti-oxidants, emulsifiers, stabilisers, micronised clay and other processing aids, flavours, antibiotics, colourants, humectants and trace mineral supplements eg iron, manganese, calcium, cobalt, zinc and copper salts and sodium chloride.

The solid potassium dipropionate used herein as preservative is suitably present in an amount of between 0.05 and 1.0% w/w of the total compound animal feedstuff, preferably between 0.1 and 0.6% w/w. Solid potassium dipropionate as prepared is substantially free flowing and retains this property for a significant duration. However, if it is to be stored for long periods, it may be advantageous to add any of the conventional anticaking agents. Thus the addition of about 2% w/w based on the potassium dipropionate of synthetically precipitated silica (eg Neosyl, Regd. Trade Mark, - ex Joseph Crosfield & Sons Ltd) to the solid preservative greatly improves its flowability and reduces caking.

Most large feed manufacturers use highly automated mixing procedures, whilst batch mixers are used in preparing smaller volumes. In the former case the ingredients (ground to a small particle size where necessary) are added at controlled rates as the mix is augered along a line. The solid potassium dipropionate can be added in this manner but it may be more suitable to prepare a pre-mix containing some feed along with the preservative and other minor components and meter the pre-mix into the main process sequence to obtain better accuracy and improved distribution. Batch preparations are commonly carried out by adding all the ingredients (ground to a small particle size where necessary) to a batch mixer. The solid potassium dipropionate may be added directly to the mixer or in the form of a pre-mix with other components. It is important that the potassium dipropionate be uniformly distributed throughout the compound feed. It is common practice to process the mixed feed further by using a special machine to press it into pellets or extrude it into other specially desired size or shapes. Animals generally prefer pelleted feeds to ground food.

Solid potassium dipropionate preservative combines the high anti-mould activity of propionic acid with the good handling properties of the neutral salts. Also, unlike propionic acid absorbed onto a carrier, potassium dipropionate does not possess an unpleasant pungent odour and evaporative losses of the acid are much reduced.

The anti-mould activity of potassium dipropionate is demonstrated by the following Examples.

EXAMPLES

The method used for testing activity of inhibitors is that propounded by Dixon, R.C. et al in Poultry Science, 60, 2182-2188 (1981), which relies on the measurement of $CO_2$ produced as a result of fungal respiration. Unlike visible mould growth which appears sometime after the initial events of fungal growth, $CO_2$ is a primary product of metabolism which can be easily and accurately determined without disturbing the feed and is applicable to measurements under controlled conditions of moisture and temperature. The determination of $CO_2$ levels would therefore appear to be potentially quicker and more objective than methods used hitherto and work has been carried out to carefully evaluate this method. Basically the method involves the measurement of $CO_2$ contained in the head space gas above moist compound feed stored in sealed containers.

The method was slightly modified and was then used to compare the preservative activity of solid potassium dipropionate with three established feed additives.

Additives Tested

Table 1

|  | Mould Inhibitor | Treatment Rate % w/w |
|---|---|---|
| Test Nos 1-3<br>Test Nos 4-6 | propionic acid<br>potassium dipropionate | 0.05, 0.10, 0.15<br>0.10, 0.15, 0.20 |
| Test Nos 7-9<br>Test Nos 10-12<br>Test Nos 13-16 | propionic acid<br>potassium dipropionate<br>calcium propionate | 0.05, 0.10, 0.15<br>0.15, 0.20, 0.25<br>0.20, 0.25, 0.3, 0.35 |
| Test Nos 17-19<br>Test Nos 20-22 | potassium dipropionate<br>propionic acid on<br>carrier* | 0.15, 0.2, 0.25<br><br>0.1, 0.2, 0.3 |

* 50% w/w propionic acid absorbed onto a vermiculite carrier.

Preparation of the Compound Feed

Pig feed comprising by weight barley meal 72%, wheatfeed 10%, protein soya (44% protein) 12.5%, fish meal 5% and mineral/vitamin supplement 0.5% was passed through a knife mill fitted with a 1 mm screen. Portions (100g) of the feed were remoistened to 20% w/w moisture content by adding the required amount of water followed by mixing by hand. An accurately weighted quantity of mould inhibitor was added and the blend was mixed thoroughly with a glass rod. The treated feed was transferred to 500 ml Winchester bottles which were then sealed by a rubber septum and a screw cap. (The cap had a 5 mm diameter hole in it to facilitate withdrawal of gas samples). The bottles were finally rolled for approximately 25 minutes on a set of motorised rollers. All treatments were prepared in triplicate and stored in the constant temperature room (23°C).

Analysis of head space gas

0.5 ml samples of head space gas were taken daily using a disposable syringe (tuberculin type) and analysed for $CO_2$ by gas chromatography. GC operating conditions are shown below.

Instrument — Packard 437 chromatograph fitted with thermalconductivity detector.

Column — 2m x 1/8" od. stainless steel packed with 80-100 mesh Porapack N.

Oven temperature — 80°C

Injection block temperature - 100°C

Helium flowrate      - 20 ml min$^{-1}$

Detector             - oven temperature 150°C

                     - filament temperature approx. 280°C

Areas were measured by electronic integration using a Spectra Physics SP 4000 data system.

Calibration was by external standard of $CO_2$ in air.

RESULTS

The mean values for the $CO_2$ content of the head space for each treatment were examined as a function of time and plotted as a graph. The storage life of the feed was taken as the time corresponding to the rapid increase in the rate of $CO_2$ production (Table 2).

The relative activity rating of the various inhibitors tested was calculated from the slope of the graph of log 10 storage life against concentration using that of propionic acid as the base value.

The results of these calculations is shown in Table 3 below.

0112080

<div align="center">

TABLE 2

Storage Life of Treated Animal Feed

</div>

| Test Nos | Treatment | % w/w | Storage Life (days) |
|---|---|---|---|
| 1 | Propionic acid | 0.05 | 6.45 |
| 2 | " | 0.10 | 10.25 |
| 3 | " | 0.15 | 17.1 |
| 4 | Potassium dipropionate | 0.10 | 6.9 |
| 5 | " | 0.15 | 9.8 |
| 6 | " | 0.20 | 13.1 |
| | Control | – | 5.0 |
| 7 | Propionic acid | 0.50 | 5.1 |
| 8 | " | 0.10 | 8.0 |
| 9 | " | 0.15 | 13.1 |
| 10 | Potassium dipropionate | 0.15 | 6.7 |
| 11 | " | 0.2 | 7.9 |
| 12 | " | 0.25 | 11.0 |
| 13 | Calcium propionate | 0.2 | 6.1 |
| 14 | " | 0.25 | 7.3 |
| 15 | " | 0.3 | 8.1 |
| 16 | " | 0.35 | 10.4 |
| | Control | – | 3.5 |
| 17 | Potassium dipropionate | 0.15 | 6.2 |
| 18 | " | 0.2 | 8.3 |
| 19 | " | 0.25 | 10.0 |
| 20 | Propionic acid (50% w/w) on carrier | 0.1 | 5.2 |
| 21 | " | 0.2 | 8.3 |
| 22 | " | 0.3 | 12.2 |
| | Control | – | 4.1 |

<div align="center">

TABLE 3

Relative Activity Ratings

</div>

| Test Nos | Inhibitor | Relative Activity Rating |
|---|---|---|
| 1-3 | Propionic acid | 1.0 |
| 4-6 | Potassium dipropionate | 0.6 |
| 7-9 | Propionic acid | 1.0 |
| 10-12 | Potassium dipropionate | 0.55 |
| 13-16 | Calcium propionate | 0.35 |
| 17-19 | Potassium dipropionate | 0.55 |
| 20-22 | Propionic acid (50% w/w) absorbed on carrier | 0.49 |

From these results propionic acid was shown to be the most effective inhibitor tested. Solid potassium dipropionate was found to be the most effective solid preservative tested with a performance exceeding those of calcium propionate and a commercial product comprising propionic acid absorbed onto an inert carrier both of which materials are currently used in commercial compound feed manufacture.

The compound animal feedstuffs of the present invention are particularly suitable for feeding cattle, pigs and poultry.

Claims:

1. A compound animal feedstuff having substantially uniformly distributed therein a solid preservative composition comprising potassium dipropionate.

2. A compound animal feedstuff comprising by weight 50-85% of cereals and cereal by-products, 0-25% of vegetable proteins, 0-10% of animal proteins and minor amounts of miscellaneous products and additives characterised in that said composition has substantially uniformly distributed therein a solid preservative composition comprising potassium dipropionate.

3. A compound animal feedstuff according to claim 2 said compound animal feedstuff comprising by weight 50-85% of cereals and cereal by-products, 5-25% of vegetable proteins, 0-10% of animal proteins and minor amounts of miscellaneous products and additives characterised in that said composition has substantially uniformly distributed therein a solid preservative composition comprising potassium dipropionate.

4. A compound animal feedstuff according to claim 2 or 3 wherein the cereals used in the compound animal feedstuffs comprise barley, wheat, oats, rye, maize, rice or mixtures thereof.

5. A compound animal feedstuff according to any one of the preceding claims 2 to 4 wherein the cereal by-products comprise one or more of malting by-products, milling by-products selected from wheat feed, oat hulls, wheat and rice, bran, maize gluten, malt culms and nutritionally improved straw, and by-products from the brewing and distillery industries selected from brewers grains, barley screenings and spent barley grains (draff).

6. A compound animal feedstuff according to any one of the preceding claims 2 to 5 wherein the vegetable proteins comprise one or more of soya beans, rape seed, sunflower seed, peas, beans, soya bean oil meal and cake, and oil products from linseed oil extraction.

7. A compound animal feedstuff according to any one of the preceding claims 2-6 wherein the animal proteins comprise one or more of dairy products, fish meal, fish protein concentrate, meat meal and bone meal.

8. A compound animal feedstuff according to any one of the preceding claims 2-7 wherein the miscellaneous products referred to comprise one or more beet pulp, molasses, fats, waste fruit and vegetable products, waste yeast and other microbial proteins selected from single cell protein (SCP), manioc, cassava and tapioca.

9. A compound animal feedstuff according to any one of the preceding claims 2-8 wherein other additives used in the compound animal feedstuff comprise one or more of vitamins, anti-oxidants, emulsifiers, stabilisers, micronised clay, other processing aids, flavours, antibiotics, colourants, humectants, trace mineral supplements and sodium chloride.

10. A compound animal feedstuff according to any one of the preceding claims wherein the solid potassium dipropionate used is present in an amount of between 0.05 and 1.0% w/w of the total compound animal feedstuff.

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-4 112 122 (LONG) * Claims 1,4,5; column 1, lines 56-64; column 2, lines 10-14 * | 1,10 | A 23 K 3/00 A 23 K 1/16 |
| A | DE-A-2 653 448 (BP CHEMICALS) * Claims 1,2,4-8; page 6, paragraph 4 - page 7 * | 2-7,9 | |
| A | EP-A-0 009 366 (BP NUTRITION) * Example 1; claim 1 * | 2,7 | |
| A | GB-A-2 008 381 (BASF) * Claims 1,4,5; page 1, line 61 - page 2, line 1 * | 1 | |

TECHNICAL FIELDS
SEARCHED (Int. Cl. ³)

A 23 K
A 23 L

The present search report has been drawn up for all claims

| Place of search THE HAGUE | Date of completion of the search 20-01-1984 | Examiner DEKEIREL M.J. |
|---|---|---|